# EUROPEAN PATENT SPECIFICATION

(11) **EP 0 333 971 B1**
(45) Date of publication and mention of the grant of the patent: **27.01.1993**
(21) Application number: 88850093.1
(22) Date of filing: 21.03.1988
(51) Int. Cl.: B01D 3/10, C02F 1/04, G03C 5/31

(54) **An apparatus for destruction of processing liquid, preferably processing liquids from photographic laboratories**
Vorrichtung zur Zerstörung einer Prozessflüssigkeit, insbesondere Prozessflüssigkeiten von photographischen Labors
Dispositif de destruction de liquide de procédés, spécialement des liquides de procédés venant de laboratoires photographiques

(43) Date of publication of application: 27.09.1989
(73) Proprietor: Gidlöf, Karl Gunnar, CH-6340 Baar (CH)
(72) Inventor: Gidlöf, Karl Gunnar, CH-6340 Baar (CH)
(74) Representative: Ferkinghoff, Claes-Göran

(56) References cited:
- FR-A- 1 575 893
- FR-A- 2 298 354
- US-A- 3 725 205

## Description

The invention concerns an apparatus for destruction of processing liquid, preferably liquid wastes from photographic laboratories, of the kind comprising a collection tank containing the processing liquid, a processing liquid evaporation device, a collection tank for collection of the condensate which is formed by the steam evaporated from the processing liquid, a conduit leading from the collection tank to the evaporation device and being equipped with a valve for intermittent discharge of processing liquid from the processing-liquid collection tank to the evaporation device and in said evaporation device, a vaporizing chamber which is surrounded by a heating medium and in which the concentrate is collected as a concentrate having the desired consistency.

Used processing liquids from photographic laboratories contain a variety of different substances, mainly heavy metals but above all silver, which should not be discharged into the sewage system and end up in recipients, such as the ground water, lakes, or water reservoirs, where they would be a serious threat to the environment. For this reason, it has hitherto been necessary to transport considerable quantities of processing-liquid wastes to destruction plants at a considerable and unacceptable expense.

The publication US-A-3 725 205 describes an apparatus, especially for household use, to purify small quantities of sewage water, in which apparatus an evaporator is operated at near room temperature to distill clean water from the sewage to produce water of potable standard. The end product in this case is the clean water, and the residue which is a slurry having a comparatively high moisture content is burned in an incinerator. The energy consumption to operate this apparatus thus is considerable.

Consequently, there is a need for a liquid-processing apparatus that is capable of handling considerable amounts of liquid at low energy costs to produce a concentrate of the desired low-moisture content. This and other problems connected with the destruction of processing liquids of the kind referred to are solved in the apparatus in accordance with the invention which is characterized by a pipe equipped with at least one ejector and extending from the evaporation device to the condensate collection tank, a cover inserted in the conduit and enclosing the pipe leading from the evaporation device to the condensate collection tank.

Further characteristics of the invention will appear from the dependent claims.

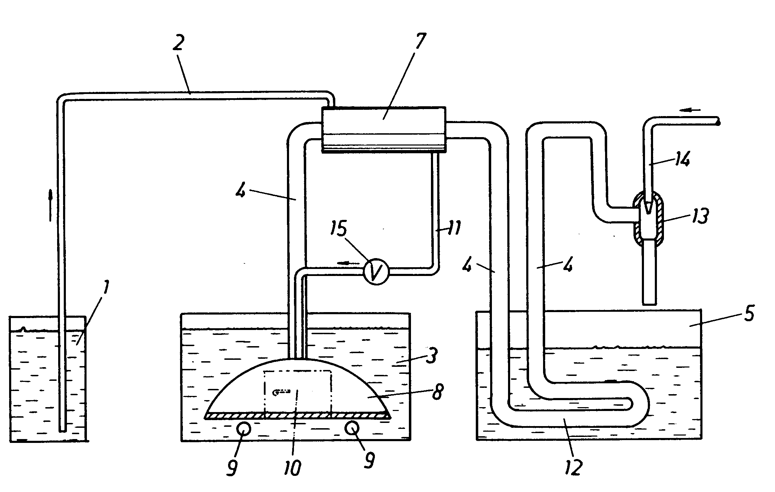

The invention will be described in closer detail with reference to the accompanying drawing figure which is a schematical representation of an apparatus in accordance with the invention.

The apparatus illustrated in the drawing figure comprises a collection tank 1 for collection of processing liquid emanating from one or possibly several photographic laboratories. From the tank 1 a conduit 2, 11 leads to a vaporizing device or evaporator 3. From the evaporator 3 a steam pipe 4 leads to a collection tank 5 for collection of condensate, that is water, from the evaporator 3. Comparatively small quantitites of processing liquid are discharged from the tank 1 through the conduit 2 for reasons that will be explained in further detail in the following.

The conduit 2 is carried to a cover 7 which encloses the steam pipe 4, whereby the processing liquid will be preheated before it reaches the evaporator 3 through the pipe 11 in which a valve 15 is positioned. Processing liquid then flows to the evaporator 3 and is introduced into the vaporizing chamber 8. In the embodiment illustrated in the drawing figure this chamber is surrounded by a liquid having a high boiling point, preferably glycol, which in accordance with the embodiment illustrated and described herein is kept at a temperature of approximately 140°C by means of two heating coils 9. As a result of the contact between the heated liquid and the walls of the chamber 8 the water in the processing liquid is vaporized and the salts contained in the processing liquid are precipitated and settle on the bottom of the chamber 8 in the form of sedimentation. The chamber 8 is formed with a hatch 10 through which the sedimentation products inside the chamber 8 may be scraped off from time to time, i.e. when a certain amount of salt, i.e. the concentrate, has collected in the chamber. From this concentrate the silver contained therein may be recovered by a simple process.

Steam flows through the steam pipe 4 and is cooled initially to some degree when passing through the cover 7 and to a further extent upon its passage through a coil pipe 12 which is submerged in the water collection tank 5. The pipe 4 debouches into a water suction apparatus or ejector 13, whereby a vacuum pressure is created in the entire pipe 4 as well as in the interior of the chamber 8. The vacuum in combination with the heating provide for efficient evaporation of the water of the processing liquid. The water collected in the tank 5 is so pure that it may be re-used in the processing system as rinsing water. From the tank 5 a pipe 14, partly illustrated, with a pump (not shown) may lead to the ejector 13.

As a result of the vacuum inside the system in combination with the valve 15 comparatively small quantities of processing liquid are supplied to the chamber 8 inside the evaporator 3 and consequently the evaporation becomes extremely efficient since the liquid will evaporize immediately upon its impingement on the walls of the chamber 8. By controlling the flow rate per time unit by means of the valve 15, which could be effected with the aid of electronic equipment in a manner known per se, the concentrate inside the chamber 8 may be given the desired consistency, i.e. be obtained as a dry powder or as a paste, e.g. by altering the quantity of each dose supplied.

For instance, the vaporizing chamber 8 of the evaporator 3 could be heated otherwise than shown. Several pipes 4 may be connected in series and furthermore each pipe 4 may be fitted with several ejectors 13. Obviously, the ejectors 13 may be replaced by means of another kind serving the same purpose.

## Claims

1. An apparatus for destruction of processing liquid, preferably liquid wastes from photographic laboratories, said apparatus comprising a collection tank (1) containing the processing liquid, a processing liquid evaporation device (3), a collection tank (5) for collection of the condensate which is formed by the steam evaporated from the processing liquid, a conduit (2, 11) leading from the collection tank (1) to the evaporation device (3) and being equipped with a valve (15) for intermittent discharge of processing liquid from the processing-liquid collection tank (1) to the evaporation device (3) and in said evaporation device (3), a vaporizing chamber (8) which is surrounded by a heating medium and in which the concentrate is collected as a concentrate having the desired consistency, **characterized** by a pipe (4) equipped with at least one ejector (13) and extending from the evaporation device (3) to the condensate collection tank (5), a cover (7) inserted into the conduit (2, 11) and enclosing the pipe (4) leading from the evaporation device (3) to the condensate collection tank (5).

2. An apparatus as claimed in claim 1, **characterized** therein that said heating medium consists of glycol.

3. An apparatus as claimed in any one of the preceding claims, **characterized** therein that the steam pipe (4) extends in a coil which is submerged in the water collected in the collection tank (5).

4. An apparatus as claimed in any one of the preceding claims, **characterized** therein that a conduit (14) extends from the water collection tank (5) to the ejectors (13) and in that a pump which is inserted in said conduit (14) is arranged to supply water from the tank (5) to the ejectors (13) for the operation of said ejectors.

## Patentansprüche

1. Vorrichtung zur Aufbereitung von Prozeßflüssigkeit, vorzugsweise Abwasser aus photographischen Labors, mit einem die Prozeßflüssigkeit enthaltenden Sammeltank (1), einer Verdampfungsvorrichtung (3) für die Prozeßflüssigkeit, einem Sammeltank (5) zur Aufnahme des Kondensats, das aus dem durch die verdampfte Prozeßflüssigkeit entstehenden Dampf gebildet wird, einer Leitung (2, 11), die von dem Sammeltank (1) zu der Verdampfungsvorrichtung (3) führt und mit einem Ventil (15) zur intermittierenden Abgabe von Prozeßflüssigkeit aus dem Prozeßflüssigkeits-Sammeltank (1) in die Verdampfungsvorrichtung (3) versehen ist, und einer in der Verdampfungsvorrichtung (3) angeordneten Verdampfungskammer (8), die von einem Heizmedium umgeben ist und in der das Konzentrat als Konzentrat mit gewünschter Konsistenz gesammelt wird, gekennzeichnet durch eine Röhre (4), die mit zumindest einem Ejektor (13) versehen ist und sich von der Verdampfungsvorrichtung (3) zu dem Kondensat-Sammeltank (5) erstreckt, und durch eine Abdeckung (7), die in die Leitung (2, 11) eingefügt ist und die von der Verdampfungsvorrichtung (3) zu dem Kondensat-Sammeltank (5) führende Röhre (4) umgibt.

2. Vorrichtung nach Anspruch 1, dadurch gekennzeichnet, daß das Heizmedium Glykol ist.

3. Vorrichtung nach einem der vorhergehenden Ansprüche, dadurch gekennzeichnet, daß die Dampfröhre (4) sich in Form einer Spule erstreckt, die in das im Sammeltank (5) angesammelte Wasser eintaucht.

4. Vorrichtung nach einem der vorhergehenden Ansprüche, dadurch gekennzeichnet, daß eine Leitung (14) von dem Wasser-Sammeltank (5) zu den Ejektoren (13) verläuft und daß eine Pumpe in der Leitung (14) angeordnet ist, die Wasser aus dem Tank (5) zu den Ejektoren (13) für deren Betrieb fördert.

## Revendications

1. Appareil pour la destruction de liquide de traitement, de préférence des déchets liquides de laboratoires photographiques, ledit appareil comportant un réservoir de collecte (1) contenant le liquide de traitement, un dispositif d'évaporation du liquide de traitement (3), un réservoir de récupération (5) destiné à récupérer le condensat formé par la vapeur évarpoée du liquide de traitement, une conduite (2, 11) entre le réservoir de collecte (1) et le dispositif d'évaporation (3) et étant pourvue d'une valve (15) destinée à l'écoulement intermittent du liquide de traitement depuis le réservoir de collecte de liquide de traitement (1) vers le dispositif d'évaporation (3) et, et dans ledit dispositif d'évaporation (3), une chambre de vaporisation (8) qui est immergée dans un milieu chauffant et dans laquelle on collecte le concentré sous forme d'un concentré ayant la consistance souhaitée, caractérise par un tuyau (4) équipé d'au moins un éjecteur (13) et reliant le dispositif d'évaporation (3) an réservoir de récupération du condensat (5), et une boite (7) qui est insérée dans la conduite (2, 11) et qui renferme le tuyau (4) reliant le dispositif d'évaporation (3) au réservoir de récupération du condensat (5).

2. Appareil suivant la revendication 1, caractérisé en ce que le milieu chauffant consiste en du glycol

3. Appareil suivant l'une quelconque des revendications que précèdent, caractérisé en ce que le tuyau à vapeur (4) se prolonge sous la forme d'un serpentin immergé dans l'eau récupérée dans le réservoir de récupération (5).

4. Appareil suivant l'une quelconque des revendications qui précèdent, caractérisé en ce qu'il comporte un tuyau (14) reliant le réservoir de récupération de l'eau (5) aux éjecteurs et en ce qu'une pompe insérée dans ledit tuyau (14) sert à alimenter les éjecteurs (13) en eau provenant du réservoir (5), en vue du fonctionnement desdits éjecteurs (13).
